# EUROPEAN PATENT APPLICATION

(11) **EP 3 570 058 A1**
(43) Date of publication of application: **20.11.2019**
(21) Application number: 18183484.7
(22) Date of filing: 13.07.2018
(51) Int. Cl.: G01R 31/396

(54) **BATTERY MONITORING SYSTEM AND METHOD**

(30) Priority: 15.05.2018 US 201815979551
(71) Applicant: Exide Technologies, Alpharetta, GA 30004 (US)
(72) Inventor: KAISERS, Dirk, 63654 Budingen (DE)
(74) Representative: Patentgruppen A/S

(57) **Abstract**

The invention relates to a battery monitoring system, comprising a battery comprising one or more battery cells; at least one battery parameter sensor operatively associated with said battery and/or said battery cells and a sensor board configured to receiving sensor data relating to at least one type of battery parameters from said at least one battery parameter sensor; and a processor configured to process said sensor data and paraphrase said sensor data in a node as data usable for a smart contract, the smart contract being a function within a blockchain acting in an autonomous way on processing said paraphrased sensor data to a transaction as an output of said smart contract according to a smart contract interval, which transaction is validated and included into said blockchain; such that said blockchain provides a trusted sensor data history indicative of battery usage and for battery status determinations, e.g. State of Health level determinations. The invention further relates to a method of receiving sensor data from at least one battery parameter sensor.

## Description

### Field of the invention

The present invention relates to a battery monitoring system and a method of monitoring a battery. More specifically, the present invention relates to a trusted battery meter and battery monitoring system configured to generate block data and blockchains with software configured to automatically determine a State of Health value at a given time therefrom.

### Background of the invention

Battery monitoring is particularly needed for lithium batteries, for example for security reasons. Such monitoring includes voltage, current and temperature data. The battery monitoring system sends the data to a battery management system that controls the battery and gives commands for charging and discharging. A battery loses capacity with time and usage. At a given point, the remaining capacity is a value referred to as "State of Health" ("SOH").

Batteries are an experience good. Their behavior and characteristics are only shown upon usage. Additionally, critical states of the battery can heavily influence the SOH of that battery. There is a current need in the industry related to a lack of accuracy or perceived low level of trust of battery operational data. For example, determination of SOH, in certain cases to determine a current state or an end of life of a battery, requires intensive, manual testing and handling, with periodic recording of measurement results over time. There are different methods for calculating a SOH value, but they all have in common that they will result in an inherently insecure value, which results cannot be checked easily (requiring the intensive manual testing and related high costs).

As referred to above, it is known to generally record battery monitoring data and to maintain records of battery monitoring data on a centralized network. However, such systems rely upon consistent and accurate measurement of parameters and battery states with reliable association of measured parameters and states with the correct battery. Not only is there the potential for error in measurement and association within the centralized network, there is also an imbalance with regard to the ability of separate parties to verify the accuracy or trustworthiness of battery monitoring data over time.

This is generally relevant for all applications of battery management or assessment, but also can be specifically relevant to (and problematic for) scenarios related to second battery life scenarios (where an exact SOH as remaining capacity in kilowatt hours (kWh) cannot be accurately and verifiably known), warranty adjudication and the selling of "power by the hour" (e.g., a customer pays in some way for energy usage).

While existing technology can measure various parameters and battery states, and though in general, historical data for such parameters and battery states may be accessed and compared with current parameters and battery states, there is room in the art for improvement by generation of a trusted battery meter and battery monitoring system in accordance with the present disclosure.

### Summary of the invention

The inventor has identified the above-mentioned problems and challenges related to trustworthy measurements of battery parameters, and subsequently made the below-described invention which may improve the trustworthiness of measurements of battery parameters.

The invention relates to a battery monitoring system, comprising: a battery comprising one or more battery cells; at least one battery parameter sensor operatively associated with said battery and/or said battery cells and a sensor board configured to receiving sensor data relating to at least one type of battery parameters from said at least one battery parameter sensor; and a processor configured to process said sensor data and paraphrase said sensor data in a node as data usable for a smart contract, the smart contract being a function within a blockchain acting in an autonomous way on processing said paraphrased sensor data to a transaction as an output of said smart contract according to a smart contract interval, which transaction is validated and included into said blockchain; such that said blockchain provides a trusted sensor data history indicative of battery usage and for battery status determinations, e.g. State of Health level determinations.

A node is a device on a blockchain network. Generally, a blockchain network comprises a plurality of nodes distributed across a widespread network. The role of a node is to support the blockchain network by maintaining a copy of a blockchain and in some instances to process transactions. The node may be implemented by dedicated hardware or be a software implementation executed by the processor of the battery monitoring system or other processing hardware internal or external to the battery monitoring system.

A blockchain transaction is a transaction record in blockchain. Transactions are stores in the form of blocks and the blocks form a chain, i.e. a block chain. In this regard, a transaction contains updated information that is stored in the blockchain.

By a trusted sensor data history is understood a data history that is secured through cryptographic connections between all the blocks in the blockchain, thereby making it practically impossible to tamper with or corrupt a single record, i.e. a sensor dataset, because this would require changing the block containing that specific record, as well as the entire chain of blocks linked to that specific block. This means that the trusted sensor data history can be relied on as true uncorrupted sensor data, and the blockchain provides a reliable sensor data history indicative of current and past battery usage.

Having a trusted sensor data history is advantageous in that a reliable history of battery usage and/or State of Health level may be achieved. Such reliable measures of a battery's status over time may enable the user of the battery to monitor his or hers usage of the battery. For instance, a sudden reduction in State of Health level may be indicative of inappropriate use of the battery, such as discharging of the battery too deeply.

These reliable measures may also lead to better recycling of batteries in some use cases. For instance, a battery provider may provide the battery to a first user for a first use time, and after this first use time, a trustworthy State of Health level may be established. Having a trustworthy establishment of State of Health level of the battery after first use time may prove vital for establishment of a guaranteed second use time of the battery to a second user. Thus, the trusted sensor data history may lead to prolonged usage of the same battery before the battery is deemed unusable and must be destroyed or recycled.

Furthermore, a battery provider renting out a battery to a battery user may charge the user on the basis of the reduction in State of Health following the use of the battery. Such a way of charging a battery user is fair in the sense that the user is charged according to the actual degradation of the battery corresponding to a reduction in the value of the battery.

Trustworthy sensor data may also prove beneficial to the manufacturer of the battery, and collection of sensor data from a plurality of batteries, may aid in further development of future battery technologies.

State of Health, or State of Health level or simply SOH, of a battery is to be understood as representation of the condition of a battery. A battery's SOH level may be presented in units of percent points, with an SOH-rating of 100 percent corresponding to a battery matching the battery's specifications. As an example, a fully charged battery has a maximum releasable capacity (Cₘₐₓ) which may be different from the rated capacity (C_{rated}). In general, Cₘₐₓ may be equal to or differ from C_{rated} for a new battery, however Cₘₐₓ will generally decline during the use of the battery. The SOH may in this case be evaluated as the ratio of Cₘₐₓ to C_{rated}.

SOH may be evaluated on the basis of different battery parameters such as internal resistance, capacity, voltage, amperage, self-discharge, ability to accept a charge, and number of charge-discharge cycles.

According to an embodiment of the invention said sensor data is processed by said processor as defined assets.

According to an embodiment of the invention said processed and paraphrased sensor data may be derived battery data, e.g. State of Health level, established based on said sensor data. If the blockchain contains State of Health levels said trusted sensor data history may be referred to as a trusted State of Health level history.

According to an embodiment of the invention said trusted sensor data history comprises a first set of said sensor data received at a first point in time and a second set of said sensor data received at a second point in time, so that a difference between a first State of Health level determined with respect to said first point in time and a second State of Health level determined with respect to said second point in time can be determined from said trusted sensor data history, said difference being reliably indicative of a change in performance of said battery between said first point in time and said second point in time.

Determining a difference in State of Health level is advantageous for example when a battery provider rents out a battery to a battery user and wants to charge the battery user according to the actual use of the battery reflected in a change in State of Health. For instance, a first battery user may use the battery less appropriately than a second battery user over the same time period, resulting in the battery used by the first battery user having a lower State of Health level than the battery used by the second battery user. The battery provider may accordingly charge the first battery user a greater amount for the battery rental than the second battery user.

According to an embodiment of the invention said battery monitoring system comprises an end of first life threshold defined by a predefined State of Health level, so that when a State of Health level determined by said trusted sensor data history is below said predefined State of Health level, repurposing of said battery for a second life application can be effectuated; wherein said predefined State of Health level is preferably between 75 percent and 85 percent, such as 80 percent, for the end of first life threshold.

Defining an end of first life threshold by a predefined State of Health level is advantageous in that a second life application can be effectuated in such a way that a guaranteed State of health level can be established at the beginning of the second life application.

According to an embodiment of the invention said battery parameters comprises voltage, amperage, temperature, optionally both ambient and battery cell temperatures, and battery or cell identification number, and optionally wherein additional received data from said battery parameter sensor comprises at least one data type selected from the group consisting of time, date, charge and discharge.

According to an embodiment of the invention a plurality of batteries are monitored simultaneously.

According to an embodiment of the invention said battery monitoring system further comprising a battery monitoring system server in operative communication with at least one battery, said battery monitoring system server storing said sensor data.

According to an embodiment of the invention said battery monitoring system server is a centralized server, with transactions written into a block and secured in said blockchain from a centralized server node, with said blockchain accessible by a plurality of external users via public or private keys.

According to an embodiment of the invention blockchain nodes are created on a plurality of servers or processors associated with a plurality of batteries or battery chargers, with said blockchain accessible by a plurality of external users via public or private keys.

According to an embodiment of the invention said battery monitoring system comprises an automatic identification of reasons for product faults related to said battery based on said trusted sensor data history.

Automatic identification of reasons for product faults related to the battery based on trusted sensor data history is advantageous because it may enable automation of a battery warrant claim.

According to an embodiment of the invention said battery monitoring system further comprises a bulk energy storage system configured to monitor the behavior of said battery using said trusted sensor data history, wherein said bulk energy storage system is accessible to a plurality of external operators involved in said bulk energy storage system.

The invention further relates to a battery monitoring method comprising the steps of: receiving sensor data from at least one battery parameter sensor operatively associated with a battery and/or battery cells of said battery, said sensor data relating to at least one type of battery parameters; processing and paraphrasing said sensor data in a node by a processor as data usable for a smart contract, the smart contract being a function within a blockchain acting in an autonomous way on processing said paraphrased sensor data to a transaction as an output of said smart contract according to a smart contract interval; validating and including said transaction into said blockchain such that said blockchain provides a trusted sensor data history indicative of battery usage and for battery status determinations, e.g. State of Health determinations.

According to an embodiment of the invention a first set of said sensor data is received at a first point in time and included into said blockchain as part of said trusted sensor data history; a first State of Health level is determined with respect to said first point in time on the basis of said trusted sensor data history; a second set of said sensor data is received at a second point in time and included into said blockchain as part of said trusted sensor data history; a second State of Health level is determined with respect to said second point in time on the basis of said trusted sensor data history; a difference between said first State of Health level and said second State of Health level is assessed, said difference being reliably indicative of a change in performance of said battery between said first point in time and said second point in time.

According to an embodiment of the invention a usage of said battery occurs between said first point in time and said second point in time, said battery usage being e.g. for propulsion of a vehicle or e.g. as part of a bulk energy storage system.

According to an embodiment of the invention the method of monitoring a battery comprises the steps of determining an end of first life when a State of Health level determined by said trusted sensor data history is below an end of first life threshold defined by a predefined State of Health level, and repurposing said battery for a second life application subsequent to said determination of said end of first life; and wherein said predefined State of Health level is preferably between 75 percent and 85 percent, such as 80 percent, for the end of first life.

According to an embodiment of the invention the method of monitoring a battery comprises the steps of automatically identifying reasons for product faults related to said battery based on said trusted sensor data history.

### The drawings

Various embodiments of the invention will in the following be described with reference to the drawings where
fig. 1 illustrates an exemplary system diagram for a battery monitoring system or battery meter, in accordance with embodiments of the present invention,
fig. 2 illustrates an additional exemplary system diagram for a battery monitoring system or battery meter, in accordance with embodiments of the present invention,
fig. 3 illustrates an exemplary blockchain sequence, with ingesting of data for sequential generation of blocks, in accordance with embodiments of the present invention,
fig. 4 shows a chart illustrating exemplary benefits of systems and methods, in accordance with embodiments of the present invention;
fig. 5 illustrates a chart of an exemplary centralized model of operation for blockchains, in accordance with embodiments of the present invention,
fig. 6 illustrates a chart of an exemplary decentralized model of operation for blockchains, in accordance with embodiments of the present invention,
fig. 7 illustrates an exemplary sensor data processing flow, from sensors to the blockchain, in accordance with embodiments of the present invention,
fig. 8 shows a flowchart illustrating an exemplary 'power by hour' scenario, in accordance with embodiments of the present invention, and
fig. 9 shows a flowchart illustrating an exemplary blockchain bulk energy storage system, in accordance with embodiments of the present invention.

### Detailed description

Further to the brief description provided above and associated textual detail of each of the figures, the following description provides additional details of example embodiments of the present invention.

Detailed illustrative embodiments are disclosed herein. However, specific functional details disclosed herein are merely representative for purposes of describing example embodiments. Example embodiments may, however, be embodied in many alternate forms and should not be construed as limited to only the embodiments set forth herein.

Accordingly, while example embodiments are capable of various modifications and alternative forms, embodiments thereof are shown by way of example in the drawings and will herein be described in detail. It should be understood, however, that there is no intent to limit example embodiments to the particular forms disclosed, but to the contrary, example embodiments are to cover all modifications, equivalents, and alternatives falling within the scope of example embodiments.

It will be understood that, although the terms first, second, etc. may be used herein to describe various steps or calculations, these steps or calculations should not be limited by these terms. These terms are only used to distinguish one step or calculation from another. For example, a first calculation could be termed a second calculation, and, similarly, a second step could be termed a first step, without departing from the scope of this disclosure. As used herein, the term "and/or" and the "/" symbol includes any and all combinations of one or more of the associated listed items.

As used herein, the singular forms "a", "an" and "the" are intended to include the plural forms as well, unless the context clearly indicates otherwise. It will be further understood that the terms "comprises", "comprising,", "includes" and/or "including", when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting of example embodiments.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Hereinafter, example embodiments of the present invention will be described in detail.

As was noted above, the present disclosure relates to a trusted battery meter and battery monitoring system configured to generate block data and blockchains with software configured to automatically determine a State of Health value at a given time therefrom. In general, the present disclosure relates to any type of battery, such as lithium, lead-acid and dual chemistry battery systems, among others.

We will now refer to the various FIGURES for a more detailed description of simulation details in accordance with exemplary embodiments of the present invention:

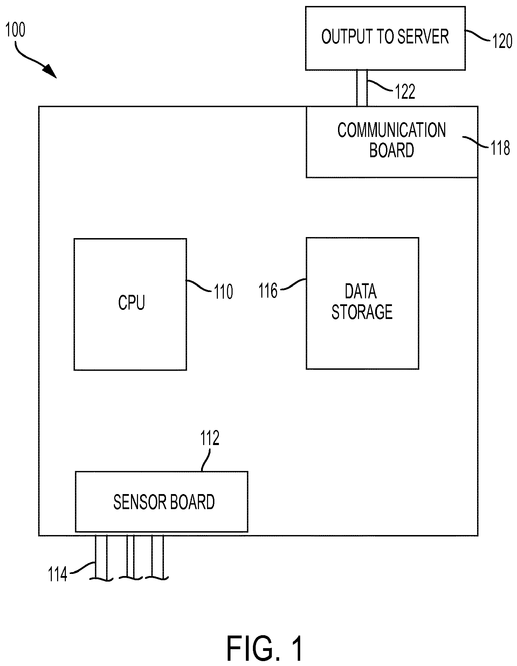

FIGURE 1 illustrates an exemplary system schematic of a battery meter or monitoring system, shown generally at 100. In an exemplary embodiment, the system at FIGURE 1 acts as a contract account, asset and validator of a blockchain.

Such exemplary system includes: a processor (indicated as "CPU" 110) and one or more sensors (shown in this exemplary schematic as a sensor board 112 with plural sensor leads or communication links, shown generally at 114). The CPU 110 processes the sensor input and, in exemplary embodiments, runs an embedded system, such as embedded Linux, among others. In additional exemplary embodiments, as will be further described below, the CPU 110 paraphrases the sensor input with a node and either executes a smart contract with code provided to a centralized server or executes the transaction locally with code provided to a locally processed blockchain.

In further exemplary embodiments, the sensor board 112 connects an IoT sensor 114 to a battery monitoring system, with a single IoT sensor handling one input, for example voltage ("V"), current ("Ah"), temperature ("t"), etc. In exemplary embodiments, such sensor data is written in MQTT ("Message Queuing Telemetry Transport") or other suitable machine protocols.

Exemplary embodiments provide optional local data storage 116 that stores various exemplary parameters and states of particular batteries at one (e.g. a predetermined) or various time intervals, such as: battery serial number; time; date; cell/ambient temperature; current; voltage; charge; and discharge. Additionally, such values may be determined, associated and stored on the cell level. In exemplary embodiments, locally stored data is used to process a transaction into a blockchain.

An exemplary communications board 118 transfers data as output to a server 120 via leads or communication links 122, for example exporting data as a transaction for a particular battery into a data pool of plural batteries. One or more communications protocols or methods may be used for the communications board 118. An exemplary server 122 runs the blockchain and is connected to other servers, server 122 acting as a blockchain node and part of the blockchain, validating a transaction. Further, in exemplary embodiments, transactions formed locally at the battery monitoring system 100 are transferred to the blockchain run by the server.

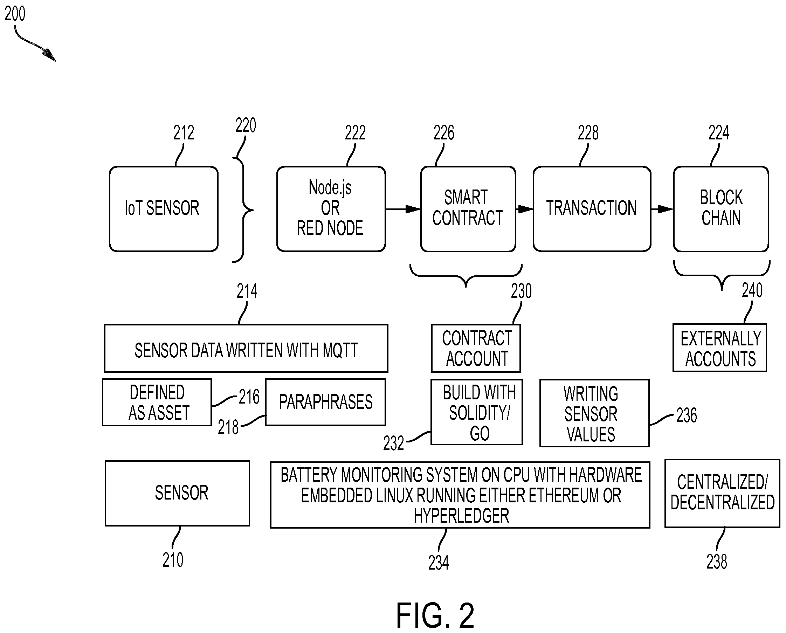

Referring now to FIGURE 2, a further exemplary system schematic of a battery meter or monitoring system in accordance with the present disclosure is shown generally at 200. In exemplary embodiments, the data processing flow shown in FIGURE 2 relies upon the exemplary battery monitoring system 100 shown in FIGURE 1.

In this exemplary scenario, sensor data is tied to the battery and is also tied to a smart contract/transaction via blockchain. In various embodiments, alternate sensor configurations are contemplated, for example, a sensor at a home or service position 210 or an Internet of Things ("IoT") sensor 212. With regard to various exemplary embodiments, we define sensor values as assets (i.e., rather than having a control function over the asset itself, battery sensor values themselves create an addition value of trusted battery history and relevant data for the SOH definition).

In exemplary embodiments, sensor data may be written in MQTT, machine to machine ("M2M") or other protocols in the field suitable as exemplary possibilities for ingesting data. Regardless of the sensor source, data may be defined as an asset (216), then paraphrased (218), may be subsequently be analyzed, or may be treated in any appropriate way for ingesting into a blockchain meter or monitoring system associated with a battery. In exemplary embodiments, a node 222 in the CPU 110 runs to paraphrase the MQTT data received from the sensor 212 as data usable for a smart contract.

In an exemplary process for bundling of sensor data, data for a battery cell is ingested from a sensor at 220 to create in a node 222 (whether it be a .js (JavaScript) node, a RED node (node-red)used to stamp a blockchain, or any other segment that can process the sensor data , for example in the form of MQTT data, received from the sensor into data processable for a smart contract) data usable for blockchain.

In exemplary embodiments, the blockchain 224 is created and expanded through smart contracts 226, with output as transaction data 228, the smart contract data 226 being derived from node 222 information (which is generated from battery sensor data). The smart contract 226 describes a function within a blockchain that can act in an autonomous manner on processes given input to given output. The contract can run in different intervals, e.g.: for normal battery usage, using a normal interval; for a flow state, using a reduced interval; and for critical battery parameters, using a higher interval. In exemplary embodiments, the transaction 228 is the output of the smart contract and includes the processed sensor data, with such transaction meant to be validated and to be included into the blockchain. With regard to the blockchain 224, a transaction 228 is put into the blockchain via an external account 240 and is created together with any number (e.g. 'x' number) of other transactions per block.

In exemplary embodiments, the smart contract data for a given node is built with a building environment 232, e.g., Solidity/Go, among others, and is tied to a contract account 230. Such a contract account 230 holds sensor data received from an IoT (or other) sensor and forms it into a blockchain transaction. In exemplary embodiments utilizing a contract account, the contract account executes the smart contract.

In further exemplary embodiments, smart contract data 226 for a given node 222 in the blockchain 224 may be provided to a battery monitoring system 234, which may also have a sensor value writing component 236 (values being the paraphrased sensor data) and one or more centralized or decentralized databases 238. Data from the blockchain 224 may also be provided to and accessible by external accounts 240.

In exemplary embodiments, the external account 240 is a battery account and has a private/public key. It processes all the relevant information of the battery IoT sensor and interacts with the blockchain. The system can either be run as centralized on x blockchain nodes or as decentralized on the participating batteries (238 in FIGURE 2). Additionally, in exemplary embodiments, a battery monitoring system 234 refers to the CPU that is running the node and the smart contract, which system can be built on an embedded Linux system running e.g., Ethereum, Hyperledger or other similar blockchain code.

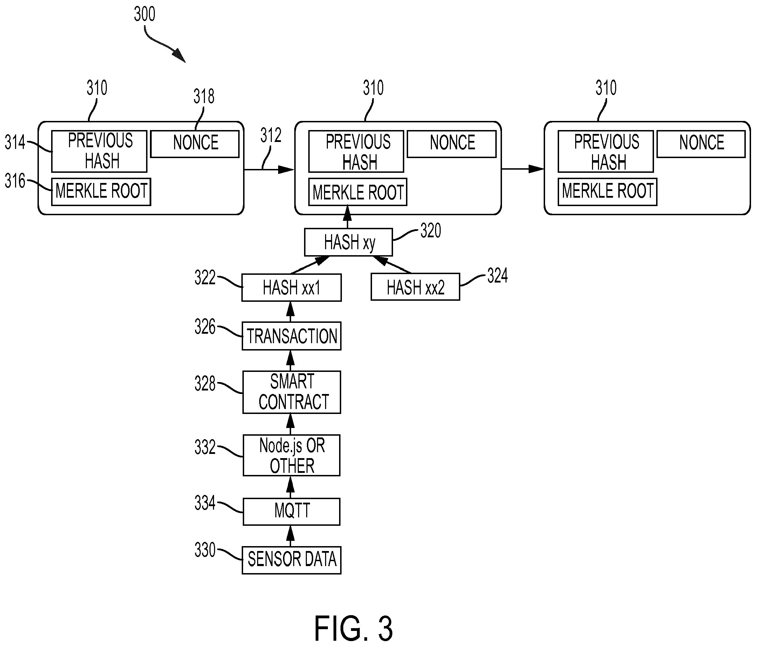

We refer now generally to FIGURE 3, which illustrates an exemplary blockchain sequence generally at 300. Three blocks 310 in sequence are illustrated, with each block utilizing an algorithm from past results/blocks (as an ingest of past results, e.g. at 312, with a current has calculated from the previous hash 314) to calculate new results/blocks. In such a way, blocks are created that are built on each other and that are linked to each other. Because the single blocks must use past results from previous blocks, the result cannot be altered. In one such way, the data may be considered "trusted."

Each block 310 includes a previous hash 314, a merkle root 316 and a nonce 318, which is an arbitrary number. The hash tree includes the different transactional data and allows efficient and secure verification. The merkle root 316 for each block is derived from one or more hashes, for example as in FIGURE 3, Hash xy at 320, which is a combination of Hash xx1 at 322 and Hash xx2 at 324.

In the illustrated exemplary embodiment, Hash xx1 is the calculated hash of the transaction 326 to be included in the merkle root, with the transaction being the output of a smart contract 328 and including the processed sensor data 330. The smart contract 328 acts autonomously and processes the input from the node 332 to a transaction 326. As we have noted before, the node 332 (e.g., node.js) processes MQTT data 334 into data that is usable as input for a smart contract 328, with the MQTT being the data 338 of the IoT sensor (source of the transaction) written to be able to process it further.

In exemplary embodiments, blockchains are continuously used alongside determination(s) of SOH continuously from within the battery usage. In further exemplary embodiments, measurements of battery state are written in a transaction and then written into the chain. In such a system, SOH may be determined at any contemporaneous point in time, any historical point in time or may be extrapolated from historical and contemporaneous data.

In additional exemplary embodiments, the battery monitoring blockchain system includes private blockchains, with reading and writing permissions defined for users by one or more administrators, as well as private and public keys to encrypt the transactions. In further exemplary embodiments, as soon as there is a possibility of exchange of data between the battery monitoring system (for example when a battery is hooked up for charging purposes), data is transferred from the battery monitoring system to a server (the server can be external, integrated into a battery management system component, such as the charger, or otherwise be centralized). In further exemplary embodiments, the system is set up to be decentralized, where the blockchain is run decentralized on the single battery monitoring system and then can be run either permissioned or permission-less.

In exemplary embodiments, from the centralized server node, transactions can be written into a block and secured in a blockchain. In other exemplary embodiments, the block is transferred to a different, centralized server that holds different blocks from different batteries, with blockchains being created at the different, centralized server. In further exemplary embodiments, the blockchain is created in the battery monitoring unit itself.

Exemplary transactions (for example created within the battery monitoring system, with further elaboration at a given time on an internal battery monitoring system node or on an external battery monitoring system node) include:
- Time;
- Serial number of the cell;
- Serial number of battery module
- Current;
- Voltage;
- Ambient Temperature;
- Cell Temperature; and
- Other.

In exemplary embodiments, the blocks are transferred at the node, with the structure of the blocks including:
- Hash of previous block
- Time stamp
- Nonce
   ∘ Transaction 1
   ∘ Transaction 2
   ∘ Other transaction(s)

In further exemplary embodiments, such blocks are integrated into the blockchain, with subsequent evaluation of the data done via software (e.g., as a server program) using given battery values to calculate capacity in kWh, State of Health and other relevant battery parameters. The data can be visualized with a Graphical User Interface ("GUI"). It can be further processed by other smart contracts within the blockchain, for example to automate payments or warranty claims.

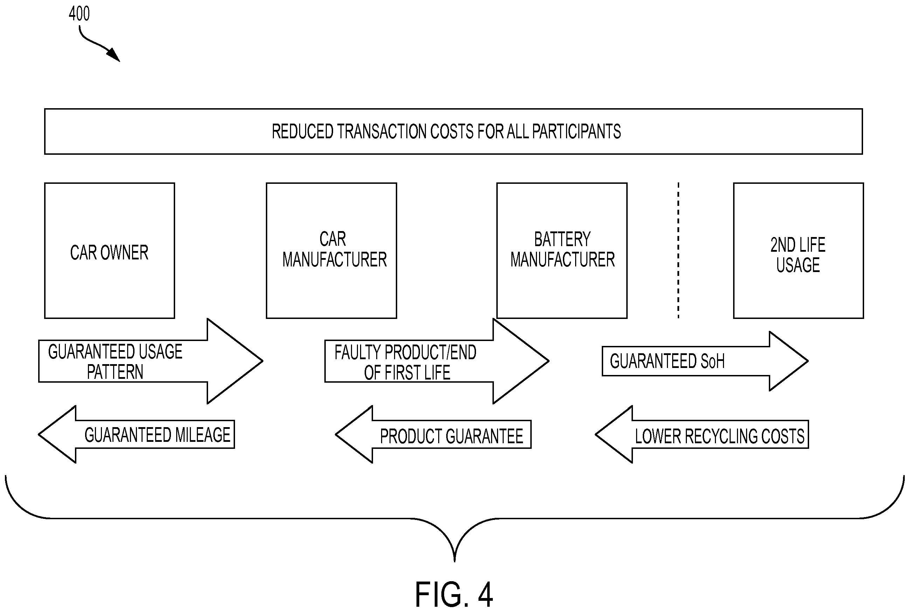

FIGURE 4 provides a chart generally showing at 400 exemplary benefits of systems in accordance with the present disclosure, including how such a system reduces costs for all participants/stakeholders (car owners, car manufacturers, battery manufacturers and second life users) by providing trusted information with a guaranteed usage pattern, positive indications of faulty products and states and/or end of first life, verifiable guarantees of SOH, lowered recycling costs, better product guarantees and guaranteed mileage. Different stakeholders have asymmetrical information with regard to battery status, SOH and eventually fault error. This is because any given battery has hidden characteristics (and as such is an experience good, as has been described above).

With regard to FIGURE 4, transaction costs may be considered costs to participate in the market. The possibility for distributed ledgers further enhances the trustworthiness/ verifiability of the data. Warranty costs are lowered for the manufacturer and reliability of the battery is enhanced for the end user.

Trusted data that is accessible for all stakeholders enhances the battery predictability and provides the stakeholders additional possibilities. For example, the battery manufacturer can enhance the given product guarantee and identify the reason of product faults automatically. Cases of production fault warranty claims can be solved automatically. Exemplary systems are used to establish a higher trust between various stakeholders, reducing the uncertainty of the battery behavior as the battery is an experience good.

Additionally, 'End of first life' of the battery can be defined and observed. For example, an end of first life can be identified as a predefined percentage of SOH, in exemplary embodiments, between about 75% and 85%, or about 80%. For a second life usage, the battery manufacturer can guarantee a given SOH, relying on the blockchain data (therefore reducing the repurposing costs). A second life application will then also lower the recycling costs of the battery manufacturer.

A car manufacturer can guarantee to a car owner a defined mileage within a defined usage pattern. Therefore the car owner can be certain that a car acts as described; in cases of a battery fault, the reason can be found on a trusted basis.

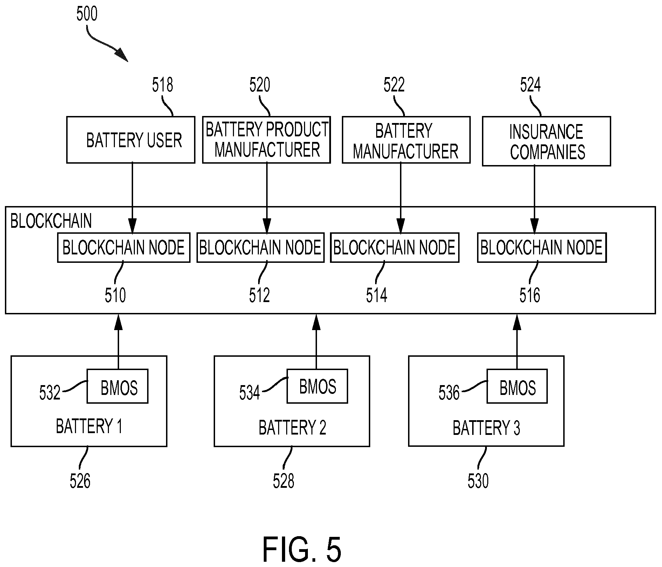

FIGURE 5 illustrates a chart generally showing at 500 an exemplary centralized model of operation for blockchains described herein. Within this exemplary centralized model, the blockchain nodes are run by different stakeholders as participants. There can be multiple stakeholders of the same kind. Additionally, the participants can use private and public cryptokeys to secure their data. In exemplary embodiments, the blockchain is not running on the device itself, but runs rather at the charger point, company server rooms or other location. Blockchain nodes 510, 512, 514 and 516 hold the blockchain and act with other nodes as a transaction validator. In exemplary embodiments, different exemplary stakeholders include a battery user 518 running a blockchain node 510, a battery product manufacturer 520 running a blockchain node 512, a battery manufacturer 522 running a blockchain node 514, and an insurance company 524 insuring battery operation and running a blockchain node 516. Three exemplary batteries 526, 528, 530 are shown, each with their own respective battery monitoring systems 532, 534, 536, which systems store the data in a transaction that will be included in the blockchain.

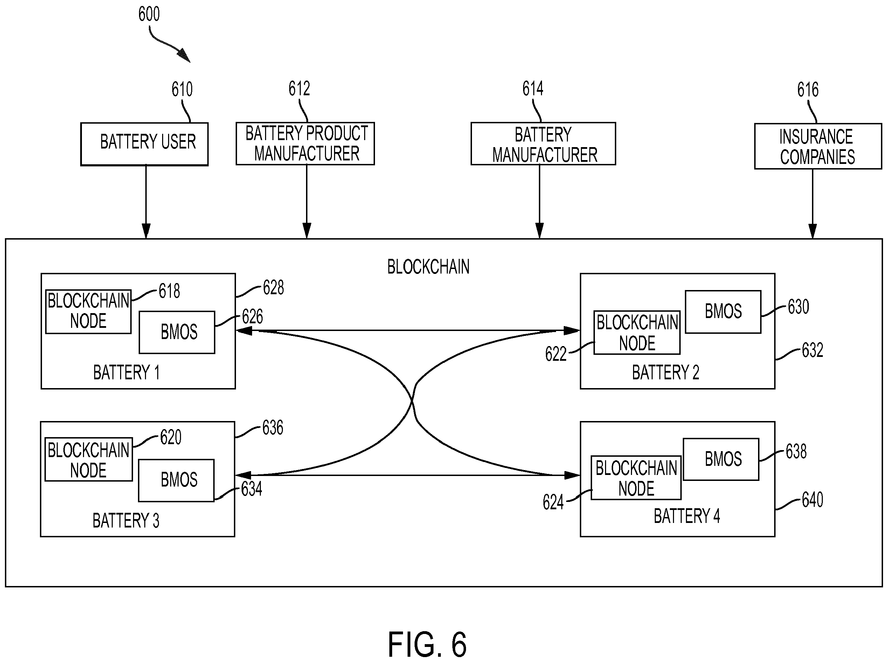

FIGURE 6 illustrates a chart generally showing at 600 an exemplary decentralized model of operation for blockchains described herein. Similar to FIGURE 5, above, plural stakeholders (e.g., battery user 610, battery product manufacturer 612, battery manufacturer 614, insurance company 616, etc.) may run blockchain nodes 618, 620, 622, 624. Within this exemplary decentralized model, the blockchain is run on the battery monitoring system itself (*see* BMOS 626, Battery 1, 628; BMOS 630, Battery 2, 632; BMOS 634, Battery 3, 636; BMOS 638, Battery 4, 640), acting as blockchain nodes with other blockchain nodes either via the communications board being always on or when connected to the charger. As is shown, in exemplary embodiments, every BMOS is linked with the other nodes.

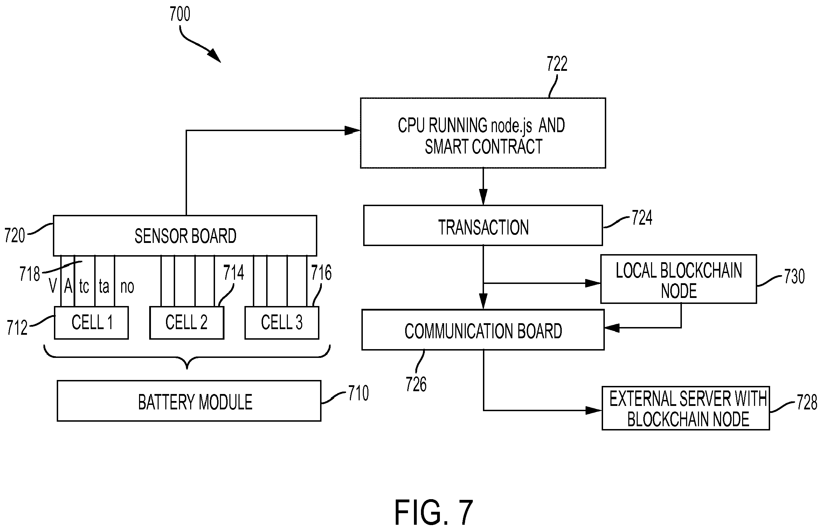

FIGURE 7 illustrates an exemplary sensor data processing flow, shown generally at 700, from the sensors to the blockchain. Beginning with the battery, in exemplary embodiments, the battery module 710 includes different combined battery cells 712, 714, 716. In exemplary embodiments, each cell is connected to an IoT sensor (not shown), with sensor input 718 including battery data, such as voltage ("V"), ampere ("A"), temperature cell ("tc"), temperature ambient ("ta") and cell number ("no"), among others. The sensor board 720 collects the different cell sensor MQTT output for provision to a CPU 722, e.g., running node.js or another suitable program to process the MQTT sensor output into an input usable for a blockchain transaction 724 via a smart contract.

Referring still to the exemplary embodiment of FIGURE 7, the transaction 724 is the output of the smart contract and includes the processed sensor data. The transaction is meant to be validated and included into the blockchain. The communications board 726 establishes the connection to an external server running a blockchain node 728 (where the transactions are transmitted via the connection board) or other battery monitoring system running blockchain nodes, for example a blockchain node 730 operated locally on the battery monitoring system.

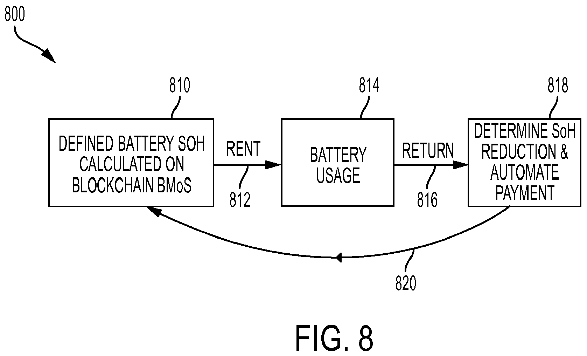

FIGURE 8 is a flowchart illustrating an exemplary 'power by hour' scenario, where a customer rents a battery for usage and returns it at a given time. In exemplary embodiments described herein, payment terms for rental of a battery may be based on one or more of kWh used, capacity used and SOH reduction. For example, in one possible scenario, a renter pays for a predetermined number of Watt Hours used (e.g., 500 in a month). In another exemplary scenario, one or more of critical usage, abusive scenarios or non-linear SOH reduction are identified by monitoring the SOH for a more precise determination of capacity used as it is relevant to payment for rental of a battery.

Still referring to FIGURE 8, in one exemplary embodiment, SOH is calculated with blockchain data, making it possible to base a rental agreement not on kWh used, but on SOH reduction, which more precisely reflects the value reduction of the battery during usage. In FIGURE 8, item 810 illustrates a battery that has a defined SOH, calculated on the data stored in the blockchain. At 812, the battery is rented to a third party. At 814, the battery is put into use. At 816, the battery is returned by the customer at a given time. At 818, the blockchain data is used to calculate the reduced SOH. In exemplary embodiments, an automated payment is triggered for the difference between old and new SOH. Item 820 indicates a readiness of the battery for subsequent rental.

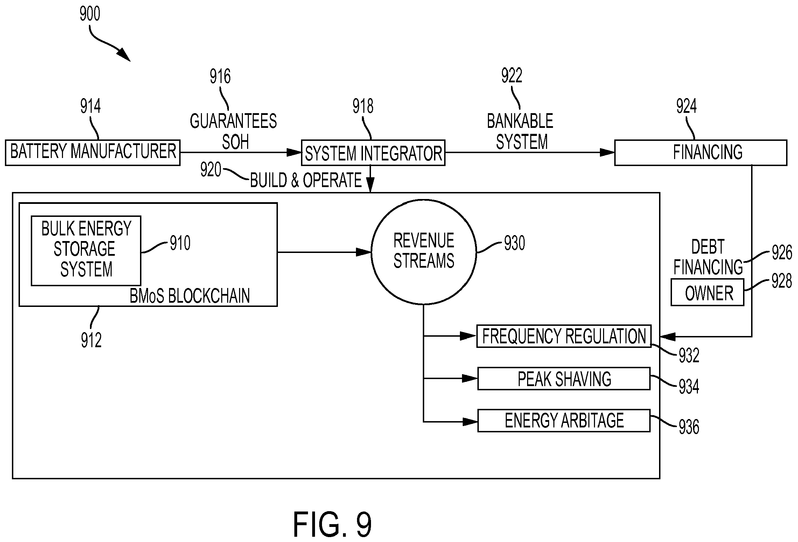

FIGURE 9 is a flowchart illustrating generally at 900 an exemplary blockchain bulk energy storage system ("BESS"), which are large battery systems, e.g., at and higher than several hundred kWhs. This system illustrates the added value of a blockchain based battery monitoring system for bulk energy storage, which systems are primarily debt financed. Such financing relies upon the battery as the core component, with the blockchain system enabling the trusted monitoring of battery behavior and calculated revenue streams. With exemplary aspects of the presently described system, the system becomes bankable, secure and ready for financing by banks, since the battery behavior can be trusted by the financing parties. In the illustrated exemplary embodiment, a BESS 910 includes a battery monitoring system 912 running blockchain.

Referring still to the exemplary system of FIGURE 9, a battery manufacturer 914 guarantees (at 916) a system integrator 918 a certain SOH for a given time period. The system integrator integrates different components into a BESS and installs a turnkey system (*see* "Build & operate" at 920). At 922, the "Bankable system" aspect indicates that the financing part 924 accepts the guarantees given by the system integrator and/or the battery manufacturer, with financing of the BESS system based on an equity/debt mix at 926 ("Debt Financing") relative to the owner 928 of the battery. At 930, revenue streams for the owner 928 are generated by virtue of usage of the battery, for example via: frequency regulation 932, with grid service to help the public electricity grid balance the grid frequency; peak shaving 934, as a means to reduce the electrical capacity taken from the grid at a given n time; and energy arbitrage 936, as a means for buying market electricity on a low price and selling it later on for a higher price.

While the invention has been described with reference to a preferred embodiment, it will be understood by those skilled in the art that various changes may be made and equivalents may be substituted for elements thereof without departing from the scope of the invention. For example, the above description may relate to any type of battery, including automotive batteries, batteries in mobile devices, etc. Additionally, the blockchain data may be used for additional functions and applications, including interlinking with other on-board sensors for a device or vehicle, client to manufacturer server links using blockchain to create an interoperable network for battery management or monitoring, and the like. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A battery monitoring system (200), comprising:
a battery comprising one or more battery cells;
at least one battery parameter sensor (210;212) operatively associated with said battery and/or said battery cells and a sensor board (112) configured to receiving sensor data (214) relating to at least one type of battery parameters from said at least one battery parameter sensor (210;212); and
a processor (110) configured to process said sensor data (214) and paraphrase said sensor data in a node (222) as data usable for a smart contract (226), the smart contract being a function within a blockchain (224) acting in an autonomous way on processing said paraphrased sensor data to a transaction (228) as an output of said smart contract (226) according to a smart contract interval, which transaction is validated and included into said blockchain;
such that said blockchain (224) provides a trusted sensor data history indicative of battery usage and for battery status determinations, e.g. State of Health level determinations.

2. The battery monitoring system (200) according to claim 1, wherein said trusted sensor data history comprises a first set of said sensor data received at a first point in time and a second set of said sensor data received at a second point in time, so that a difference between a first State of Health level determined with respect to said first point in time and a second State of Health level determined with respect to said second point in time can be determined from said trusted sensor data history, said difference being reliably indicative of a change in performance of said battery between said first point in time and said second point in time.

3. The battery monitoring system (200) according to claim 1 or 2, comprising an end of first life threshold defined by a predefined State of Health level, so that when a State of Health level determined by said trusted sensor data history is below said predefined State of Health level, repurposing of said battery for a second life application can be effectuated; wherein said predefined State of Health level is preferably between 75 percent and 85 percent, such as 80 percent, for the end of first life threshold.

4. The battery monitoring system (200) according to any of the preceding claims, wherein said battery parameters comprises voltage, amperage, temperature, optionally both ambient and battery cell temperatures, and battery or cell identification number, and optionally wherein additional received data from said battery parameter sensor comprises at least one data type selected from the group consisting of time, date, charge and discharge.

5. The battery monitoring system (200) according to any of the preceding claims, wherein a plurality of batteries are monitored simultaneously.

6. The battery monitoring system (200) according to any of the preceding claims, further comprising a battery monitoring system server in operative communication with at least one battery, said battery monitoring system server storing said sensor data (214).

7. The battery monitoring system (200) according to claim 6, wherein said battery monitoring system server is a centralized server, with transactions (226) written into a block and secured in said blockchain (224) from a centralized server node, with said blockchain (224) accessible by a plurality of external users via public or private keys.

8. The battery monitoring system (200) according to any of the preceding claims wherein blockchain nodes are created on a plurality of servers or processors associated with a plurality of batteries or battery chargers, with said blockchain accessible by a plurality of external users via public or private keys.

9. The battery monitoring system (200) according to any of the preceding claims, comprising an automatic identification of reasons for product faults related to said battery based on said trusted sensor data history.

10. The battery monitoring system (200) according to any of the preceding claims further comprising a bulk energy storage system configured to monitor the behavior of said battery using said trusted sensor data history, wherein said bulk energy storage system is accessible to a plurality of external operators involved in said bulk energy storage system.

11. A battery monitoring method comprising the steps of:
receiving sensor data from at least one battery parameter sensor operatively associated with a battery and/or battery cells of said battery, said sensor data relating to at least one type of battery parameters;
processing and paraphrasing said sensor data in a node (222) by a processor as data usable for a smart contract (226), the smart contract being a function within a blockchain (224) acting in an autonomous way on processing said paraphrased sensor data to a transaction (228) as an output of said smart contract according to a smart contract interval;
validating and including said transaction into said blockchain (224) such that said blockchain provides a trusted sensor data history indicative of battery usage and for battery status determinations, e.g. State of Health determinations.

12. The battery monitoring method according to claim 11, wherein;
a first set of said sensor data is received at a first point in time and included into said blockchain as part of said trusted sensor data history;
a first State of Health level is determined with respect to said first point in time on the basis of said trusted sensor data history;
a second set of said sensor data is received at a second point in time and included into said blockchain as part of said trusted sensor data history;
a second State of Health level is determined with respect to said second point in time on the basis of said trusted sensor data history;
a difference between said first State of Health level and said second State of Health level is assessed, said difference being reliably indicative of a change in performance of said battery between said first point in time and said second point in time.

13. The battery monitoring method according to claim 12, wherein a usage of said battery occurs between said first point in time and said second point in time, said battery usage being e.g. for propulsion of a vehicle or e.g. as part of a bulk energy storage system.

14. The battery monitoring method according to any of the claims 11-13, comprising the steps of determining an end of first life when a State of Health level determined by said trusted sensor data history is below an end of first life threshold defined by a predefined State of Health level, and repurposing said battery for a second life application subsequent to said determination of said end of first life; and wherein said predefined State of Health level is preferably between 75 percent and 85 percent, such as 80 percent, for the end of first life.

15. The battery monitoring method according to any of the claims 11-14, comprising the steps of automatically identifying reasons for product faults related to said battery based on said trusted sensor data history.
